# EUROPEAN PATENT SPECIFICATION

(11) **EP 2 922 358 B1**
(45) Date of publication and mention of the grant of the patent: **22.05.2019**
(21) Application number: 15154145.5
(22) Date of filing: 11.01.2012
(51) Int. Cl.: H04W 72/04, H04W 16/14, H04W 72/08, H04L 5/00

(54) **Interference processing at a serving base station**
Interferenzverarbeitung an einer bedienenden Basisstation
Traitement des interférences sur une station de base desservante

(30) Priority: 11.11.2010 CN 201010540334
(43) Date of publication of application: 23.09.2015
(62) Divisional of application: 12719920.6
(73) Proprietor: Huawei Technologies Co., Ltd., Longgang District Shenzhen, Guangdong 518129 (CN)
(72) Inventor: Yu, Yinghui, 518129 Guangdong (CN); Wan, Lei, 518129 Guangdong (CN)
(74) Representative: Isarpatent

(56) References cited:
- WO-A1-2011/130451
- WO-A2-2010/124241
- WO-A2-2010/141913
- US-A1- 2008 064 432
- US-A1- 2009 257 390
- US-A1- 2010 195 582
- US-A1- 2010 220 597
- US-A1- 2010 222 062

## Description

### FIELD OF THE INVENTION

The present invention relates to the field of wireless communications technologies, and in particular, to an interference processing method and apparatus.

### BACKGROUND OF THE INVENTION

In a frequency division duplexing (FDD, Frequency Division Duplexing) system, in one aspect, a downlink (DL, Down link) frequency band and an uplink (UL, Up link) frequency band usually use a same bandwidth, and traffic volume of the DL frequency band is usually higher than traffic volume of the UL frequency band. As a result, a part of UL resources of the UL frequency band are relatively idle. In another aspect, in a case where UL traffic volume matches DL traffic volume, UL spectrum efficiency is higher than DL spectrum efficiency, so that the utilization of a UL subframe is lower than that of a DL subframe and redundancy occurs in UL resources. Therefore, to effectively use redundant UL resources, a part of UL access link resources in the FDD system may also be used as a DL access link or a radio backhaul link in a time division duplexing (TDD, Time Division Duplex) system, so as to improve the utilization of an FDD UL frequency band.

When UL subframes of a neighboring base station that correspond to a part of FDD UL subframes of a base station are used for downlink data transmission of the neighboring base station, for backward compatibility of a downlink data transmission feedback from a UE to the base station and flexible scheduling of data in a downlink subframe of the base station, a base station providing an FDD UL resource will send uplink control signaling through a blank uplink subframe. However, sending the uplink control signaling will interfere with receiving downlink control channel signaling of a downlink subframe in an FDD UL frequency band by the neighboring base station.

To ensure backward compatibility of a downlink data transmission feedback from a UE to a base station and flexible scheduling of data in a downlink subframe of the base station, a base station using the TDD access technology is also capable of providing a blank uplink subframe and sending uplink control signaling through the blank uplink subframe. However, sending the uplink control signaling will interfere with receiving downlink control channel signaling of a downlink subframe in a TDD frequency band by a neighboring base station.

Document WO 2010/124241 A2 relates to a method for configuring a sounding reference signal transmission in a wireless communication environment. In particular, two base stations can exchange information via a backhaul, wherein the exchanged information can be utilized to enhance scheduling information.

Document US 2009/257390 A1 relates to a method enabling uplink control for restricted association networks.

Document US 2010/220597 A1 relates to time division duplexing configuration for access point base stations.

### SUMMARY OF THE INVENTION

The present invention provides an interference processing method, a serving base station, a computer program product and a computer-readable medium according to respective independent claims 1, 4, 8 and 9 to solve a signaling interference problem in uplink and downlink control channels between neighboring base stations.

Exemplary, it is disclosed an interference processing method is provided, including:
receiving, by a serving base station, configuration information of a cell of a neighboring base station, where the configuration information of the cell of the neighboring base station includes uplink control channel configuration information, downlink control channel configuration information, or configuration information of an interference frequency domain or time domain of the cell of the neighboring base station; and
determining, by the serving base station, an overlapping part between resources according to the configuration information of the cell of the neighboring base station and configuration information of a cell of the serving base station, and allocating a resource, where the allocating a resource includes not allocating the overlapping part between the resources in the configuration information of the cell of the serving base station and the cell of the neighboring base station to the serving base station,
wherein uplink control signaling is sent by the neighboring base station at a co-channel of an adjacent channel location with the serving base station, or downlink control signaling is sent by the neighboring base at a co-channel of an adjacent channel location with the serving base station.

Exemplary, it is disclosed an interference processing apparatus is provided, including:
a receiving and sending module, configured to receive configuration information of a cell of a neighboring base station, where the configuration information of the cell of the neighboring base station includes uplink control channel configuration information, downlink control channel configuration information, or configuration information of an interference frequency domain or time domain of the cell of the neighboring base station; and
an allocation module, configured to determine an overlapping part between resources according to the configuration information of the cell of the neighboring base station and configuration information of a cell of a serving base station, and allocate a resource, where the allocating a resource includes not allocating the overlapping part between the resources in the configuration information of the cell of the serving base station and the cell of the neighboring base station to the serving base station,
wherein uplink control signaling is sent by the neighboring base station at a co-channel of an adjacent channel location with the serving base station, or downlink control signaling is sent by the neighboring base at a co-channel of an adjacent channel location with the serving base station.

Accordingly, when the neighboring base station sends the uplink control signaling at a co-channel or an adjacent channel location with the serving base station, interference from sending the uplink control signaling in the uplink control channel to receiving the downlink control signaling in the downlink control channel of the serving base station can be eliminated; alternatively, interference from sending downlink control signaling in a downlink control channel of the neighboring base station at a co-channel or an adjacent channel location with the serving base station to receiving uplink control signaling in an uplink control channel of the serving base station is eliminated.

### BRIEF DESCRIPTION OF THE DRAWINGS

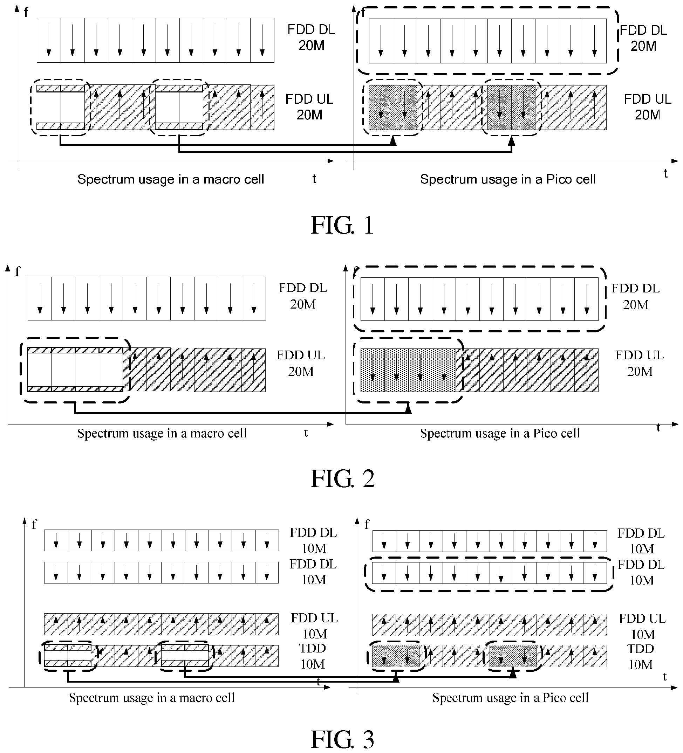

To describe the technical solutions in the embodiments of the present invention more clearly, the following briefly introduces the accompanying drawings required for describing the embodiments. Apparently, the accompanying drawings in the following descriptions show merely some embodiments of the present invention, and persons of ordinary skill in the art may still derive other drawings from these accompanying drawings without creative efforts. The embodiments relating to FIG. 1 to FIG. 20 are only for illustrative purposes for a better understanding of the present invention.
FIG. 1 is a schematic diagram of an application scenario where a part of subframes in an FDD UL frequency band are used to transmit downlink subframes according to an embodiment;
FIG. 2 is a schematic diagram of another application scenario where a part of subframes in an FDD UL frequency band are used for downlink transmission according to an embodiment;
FIG. 3 is a schematic diagram of an application scenario of downlink transmission using a part of subframes of an FDD UL resource according to an embodiment;
FIG. 4 is a schematic diagram of another application scenario of downlink transmission using a part of subframes of an FDD UL resource according to an embodiment;
FIG. 5 is a schematic diagram of another application scenario of downlink transmission using a part of subframes of an FDD UL resource according to an embodiment;
FIG. 6a is a schematic diagram of an application scenario of downlink transmission using a part of subframes of an FDD UL resource according to an embodiment;
FIG. 6b is a schematic diagram of another application scenario of downlink transmission using a part of subframes of a part of FDD UL resources according to an embodiment;
FIG. 7 is a diagram of an application scenario of downlink transmission using a TDD uplink subframe for downlink transmission according to an embodiment;
FIG. 8 is a schematic diagram of an application scenario of downlink transmission using a part of subframes of an FDD UL resource according to an embodiment;
FIG. 9 is a schematic diagram of another application scenario of downlink transmission using a part of subframes of an FDD UL resource according to an embodiment;
FIG. 10a is a schematic diagram of an application scenario of downlink transmission using a part of subframes of an FDD UL resource according to an embodiment;
FIG. 10b is a schematic diagram of another application scenario where a part of subframes of an FDD UL resource are used for downlink transmission according to an embodiment;
FIG. 11a is a schematic diagram of an application scenario where a part of subframes of an FDD UL resource are used for downlink transmission according to an embodiment;
FIG. 11b is a schematic diagram of another application scenario of downlink transmission using a part of subframes of an FDD UL resource according to an embodiment;
FIG. 12 shows another application scenario of downlink transmission using a TDD uplink subframe for downlink transmission according to an embodiment;
FIG. 13 is a schematic flowchart of an interference processing method according to an embodiment;
FIG. 14 is a schematic flowchart of an interference processing method according to an embodiment;
FIG. 15 is a schematic flowchart of an interference processing method according to an embodiment;
FIG. 16 is a schematic flowchart of an interference processing method according to an embodiment;
FIG. 17 is a schematic flowchart of an interference processing method according to an embodiment;
FIG. 18 is a schematic structural diagram of an interference processing method according to an embodiment;
FIG. 19 is a schematic structural diagram of an interference processing method according to an embodiment;
FIG. 20 is a schematic flowchart of an interference processing method according to an embodiment;
FIG. 20a is a schematic flowchart of an interference processing method according to an embodiment of the present invention;
FIG. 21 is a schematic structural diagram of an interference processing apparatus according to an embodiment of the present invention;
FIG. 22 is a schematic structural diagram of another interference processing apparatus according to an embodiment of the present invention; and
FIG. 23 is a schematic structural diagram of another interference processing apparatus according to an embodiment of the present invention.

### DETAILED DESCRIPTION OF THE EMBODIMENTS

To make the objectives, technical solutions, and advantages of the present invention more comprehensible, the following further describes the present invention in detail with reference to the accompanying drawings. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

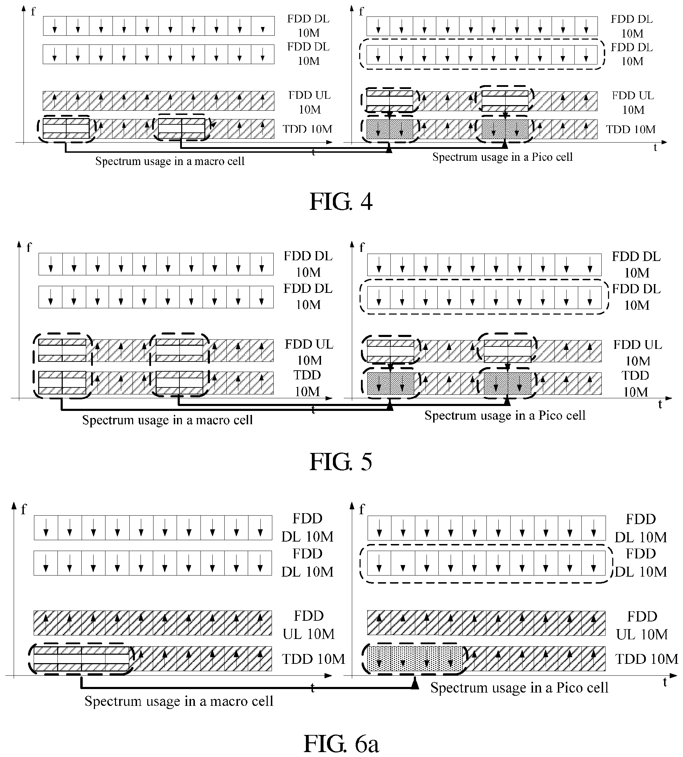

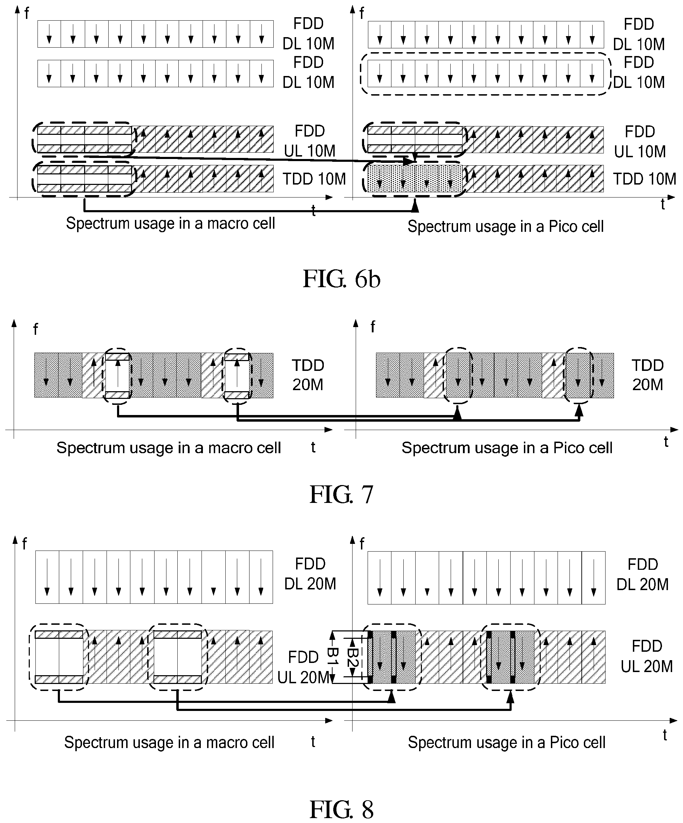

In the present invention, a heterogeneous scenario is taken as an example. An application of a homogeneous scenario is similar to an application of the heterogeneous scenario. The heterogeneous scenario means that low power nodes are distributed in a coverage area of a macro base station to form heterogeneous systems having different node types in the same coverage area. A low power node (LowPowerNode, LPN) includes a micro cell (Micro Cell), a pico cell (Pico Cell), an RRH (RemoteRadio Head), a relay node (Relay Node, RN), a Femto (a nano cellular base station, which generally refers to a home base station), or the like. Heterogeneous scenarios include but are not limited to those illustrated in embodiments of the present invention. In the embodiments of the present invention, a macro cell and a micro cell are taken as examples for illustration. FIG. 1 is a schematic diagram of an application scenario where a part of subframes in an FDD UL frequency band are used to transmit downlink subframes according to an embodiment, and the scenario is an application scenario in TDD compatibility mode. FIG. 2 is a schematic diagram of another application scenario where a part of subframes in an FDD UL frequency band are used for downlink transmission according to an embodiment, and the scenario is an application scenario in non-TDD compatibility mode. FIG. 3 is a schematic diagram of an application scenario of downlink transmission using a part of subframes of an FDD UL resource according to an embodiment, and the scenario is an application scenario in TDD compatibility mode. FIG. 4 is a schematic diagram of another application scenario of downlink transmission using a part of subframes of an FDD UL resource according to an embodiment, and the scenario is an application scenario in TDD compatibility mode. FIG. 5 is a schematic diagram of another application scenario of downlink transmission using a part of subframes of an FDD UL resource according to an embodiment, and the scenario is an application scenario in TDD compatibility mode. FIG. 6a is a schematic diagram of an application scenario of downlink transmission using a part of subframes of an FDD UL resource according to an embodiment; and FIG. 6b is a schematic diagram of another application scenario of downlink transmission using a part of subframes of a part of FDD UL resources according to an embodiment; and the application scenarios illustrated in FIG. 6a and FIG. 6b are application scenarios in non-TDD compatibility mode. In FIG. 1 to FIG. 6b:
Access links of a macro cell are as follows:
   DL (from the macro cell to a user equipment of macro cell (MUE, UE of macro cell)): An FDD DL frequency band is used, which is shown as FDD DL white boxes in the figures; and
   UL (from the MUE to the macro cell): A part of subframes in an FDD UL frequency band are used, which are shown as slash subframes in the FDD UL frequency band in the figures. A micro cell has two access links:
      One is an FDD access link, and the FDD access link is configured by a system.
   DL (from the micro base station to a user equipment of pico cell (PUE, UE of Pico cell)): An FDD DL frequency band is used, which is shown as white subframes in the FDD DL frequency band in figures; and
   UL (from the PUE to the micro cell): A part of subframes in an FDD UL frequency band are used, which are shown as slash subframes in the FDD UL frequency band in the figures.
      The other is a TDD access link, and the TDD access link uses a resource in an FDD UL.
   DL (from the micro cell to the PUE): A part of subframes in an FDD UL frequency band are used, which are shown as black-dotted gridding subframes in the FDD UL frequency band in the figures; and
   UL (from the PUE to the micro cell): A part of subframes in the FDD UL frequency band are used, which are shown as slash subframes in the FDD UL frequency band in the figures.

An uplink control resource, for example, a physical uplink control channel (Physical Uplink Control Channel, PUCCH) resource, a physical random access channel (Physical Random Access Channel, PRACH) resource, or a channel sounding reference symbol Sounding RS resource, can be reserved in a blank uplink subframe to maintain backward compatibility. In the embodiments, a PUCCH is taken as an example. A PUCCH resource is reserved on the edge of an uplink frequency band of a blank subframe in FIG. 1 to FIG. 6. The PUCCH resource may be used for an ACK/NACK feedback and/or a CQI (Channel Quality Indicator) feedback from a UE. Reservation of another resource is similar to that of the PUCCH resource, only that locations for resource reservation are different.

FIG. 7 is a diagram of an application scenario where a TDD uplink subframe is used for downlink transmission according to an embodiment, and the scenario adopts a radio access mode in a TDD system. Details are as follows:

Access links of a macro base station are as follows:
Downlink: TDD downlink subframes are shown as black fine grids in the figure; and
Uplink: TDD uplink subframes are shown as slashes and shadows in the figure.

Blank uplink subframe: In a blank uplink subframe, only an uplink control channel is sent and no data service is sent. A resource sent through an uplink control channel includes at least one of, for example, a PUCCH resource, a PRACH resource, or a Sounding RS resource. A PUCCH resource is reserved on the edge of an uplink frequency band of a blank subframe. The PUCCH resource may be used for an ACK/NACK feedback and/or a CQI feedback from a UE. Reservation of another resource is similar to that of the PUCCH resource, only that locations for resource reservation are different.

Access links of a micro base station are as follows:
Downlink: TDD downlink subframes are shown as black fine grids in the figure; and
Uplink: TDD uplink subframes are shown as slashes and shadows in the figure.

Normal downlink data transmission is performed on a downlink subframe corresponding to the blank uplink subframe of the macro base station.

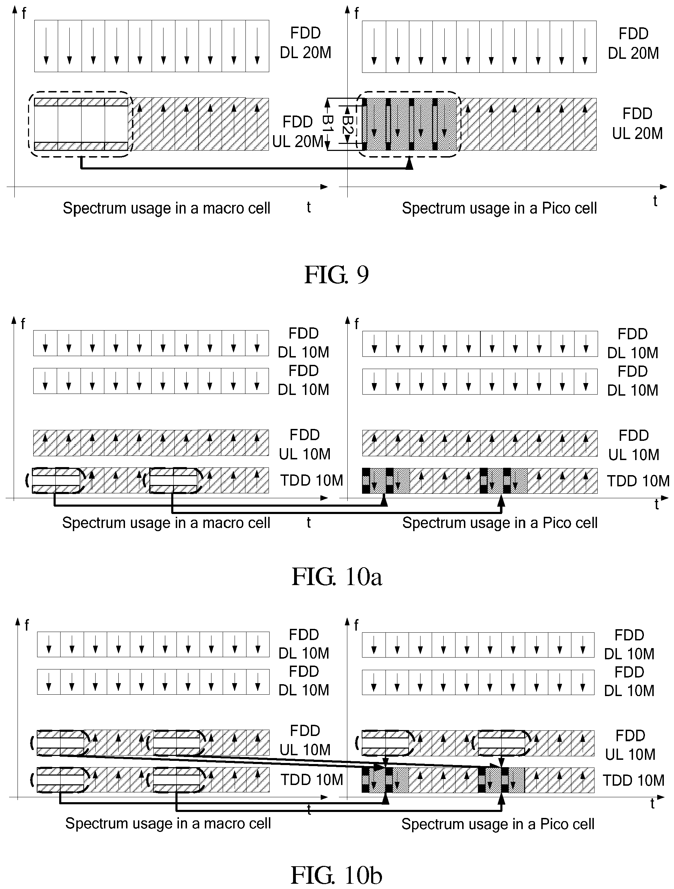

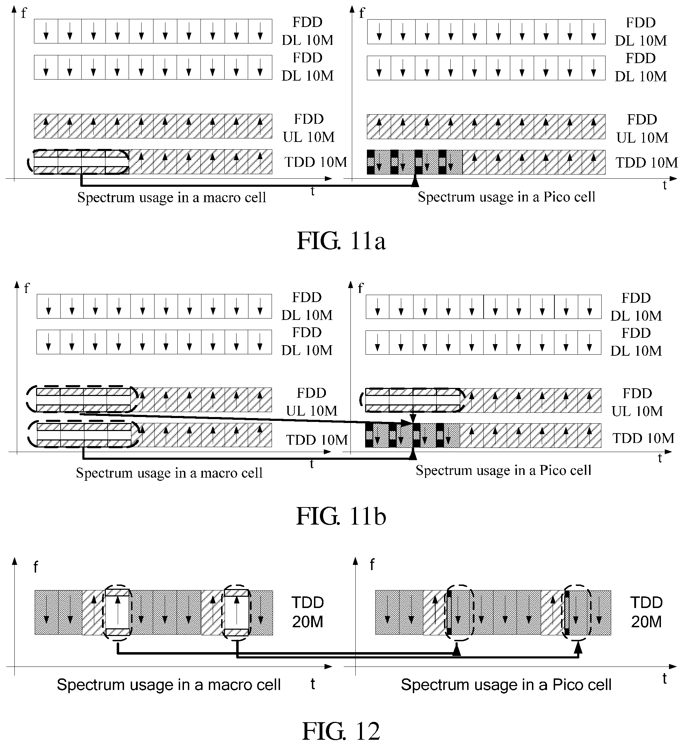

FIG. 8 is a schematic diagram of an application scenario of downlink transmission using a part of subframes of an FDD UL resource according to an embodiment, the scenario is a schematic diagram of an application scenario where transmission in an uplink control channel interferes with a downlink control channel that is in a same frequency band as the uplink control channel, and the scenario is in TDD compatibility mode. FIG. 9 is a schematic diagram of another application scenario of downlink transmission using a part of subframes of an FDD UL resource according to an embodiment, and the scenario is in non-TDD compatibility mode and is a schematic diagram of an application scenario where transmission in an uplink control channel interferes with a downlink control channel that is in a same frequency band as the uplink control channel. FIG. 10a is a schematic diagram of an application scenario of downlink transmission using a part of subframes of an FDD UL resource according to an embodiment; and FIG. 10b is a schematic diagram of another application scenario of downlink transmission using a part of subframes of an FDD UL resource according to an embodiment; and the scenarios in FIG. 10a and FIG. 10b are in TDD compatibility mode and are schematic diagrams of application scenarios where transmission in an uplink control channel interferes with a downlink control channel of a neighboring base station, where the downlink control channel and the uplink control channel are in adjacent frequency bands. FIG. 11a is a schematic diagram of an application scenario of downlink transmission using a part of subframes of an FDD UL resource according to an embodiment; and FIG. 11b is a schematic diagram of another application scenario where a part of subframes of an FDD UL resource are used for downlink transmission according to an embodiment; and FIG. 11a and FIG. 11b are in non-TDD compatibility mode and are application scenarios where transmission in an uplink control channel interferes with a downlink control channel of a neighboring base station, where the downlink control channel and the uplink control channel are in adjacent frequency bands. FIG. 12 shows another application scenario of downlink transmission using a TDD uplink subframe for downlink transmission according to an embodiment, and the scenario is an application scenario where transmission in an uplink control channel interferes with a downlink control channel of a neighboring base station. In FIG. 8 to FIG. 12, a case where an uplink control channel of a macro base station interferes with a downlink control channel of a micro base station is further provided. Small boxes marked in black are schematic diagrams of interference locations. In FIG. 8 to FIG. 12, a physical uplink control channel PUCCH is taken as an example of the uplink control channel, and a physical downlink control channel (Physical Downlink Control Channel, PDCCH) is taken as an example of the downlink control channel. A case where another uplink control channel (such as a PRACH and Sounding RS) interferes with another downlink control channel (such as a PDCCH, CRS, a synchronization channel, and a broadcast channel), or interference from a downlink control channel to an uplink control channel is processed similarly to interference between a PUCCH and a PDCCH. Processing methods are completely the same, only that the interference locations are different. Therefore, details are not repeated herein.

In the foregoing application scenarios, to effectively utilize redundant UL resources or implement different uplink and downlink configurations of TDD systems in different areas, resources of a part of uplink subframes in an FDD UL frequency band or a part of uplink subframes of a TDD system may be used for TDD DL access link resources, thereby improving the utilization of the FDD UL frequency band or implementing different uplink and downlink configurations of the TDD systems in different areas. However, sending signaling of a part of uplink subframes in the FDD UL frequency band or a part of TDD uplink subframes interferes with receiving DL signaling in an FDD UL frequency band of a neighboring base station or with receiving DL signaling in a TDD frequency band.

In addition, if a TDD access system and an FDD access system of a base station are at a same site, sending signaling of a part of uplink subframes in an FDD UL frequency band of the base station interferes with receiving DL signaling in the FDD UL frequency band of the base station.

In embodiments, a macro base station is taken as an example of a neighboring base station, and a micro base station is taken as an example of a serving base station for illustration. Application scenarios of the method include but are not limited to those illustrated in the embodiments.

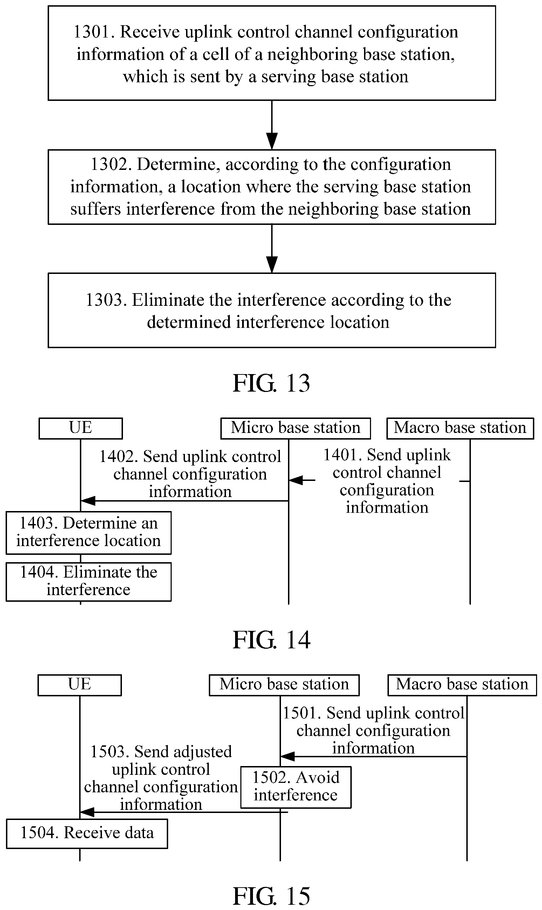

FIG. 13 is a schematic flowchart of an interference processing method according to an embodiment. This embodiment includes:

1301. A user terminal UE receives uplink control channel configuration information of a cell of a neighboring base station, which is sent by a serving base station, where the uplink control channel configuration information includes physical uplink control channel PUCCH configuration information, physical random access channel PRACH configuration information, or channel sounding reference symbol Sounding RS configuration information of the cell of the neighboring base station.

1302. The UE determines, according to the configuration information, a location where the serving base station suffers interference from the neighboring base station.

1303. Eliminate the interference according to the determined interference location.

According to an interference processing method provided in an embodiment, a user terminal UE receives uplink control channel configuration information of a cell of a neighboring base station, which is sent by a serving base station, and the UE determines, according to the configuration information, a location where the serving base station suffers interference from the neighboring base station, and eliminates the interference according to the location. In this way, when the neighboring base station sends uplink control signaling, interference between sending the uplink control signaling in an uplink control channel and receiving downlink control signaling in a downlink control channel at a corresponding location of the serving base station is eliminated.

In addition, when the neighboring base station sends the uplink control signaling at a co-channel or an adjacent channel location with the serving base station, interference from sending the uplink control signaling in the uplink control channel to receiving the downlink control signaling in the downlink control channel of the serving base station can be eliminated; alternatively, interference from sending downlink control signaling in a downlink control channel of the neighboring base station at a co-channel or an adjacent channel location with the serving base station to receiving uplink control signaling in an uplink control channel of the serving base station is eliminated.

FIG. 14 is another interference processing method according to an embodiment, including:

1401. A macro base station sends uplink control channel configuration information of a cell of the macro base station to a micro base station.

The uplink control channel configuration information may include physical uplink control channel (PUCCH) configuration information, physical random access channel (PRACH) configuration information, or channel sounding reference symbol (Sounding RS) configuration information of the cell of the macro base station.

The PUCCH configuration information includes:
a location of an uplink control resource, used to determine a location of a resource block occupied by a PUCCH;
a cyclically shifted sequence and an orthogonal code sequence of the uplink control resource, used to determine a resource code of the PUCCH; and
an offset of an uplink control channel, used to determine a location of a resource occupied in the resource block by the PUCCH.

The PRACH configuration information includes:
a PRACH configuration index, used to determine a location of a resource block occupied by a PRACH time domain in a radio frame;
a frequency domain offset of the PRACH, used to determine a location of a PRACH frequency domain; and
a PRACH access preamble configuration, used to determine a code that initiates a random access.

The Sounding RS configuration information includes:
a bandwidth configuration of a Sounding RS; and
a subframe configuration of the Sounding RS.

1402. The micro base station sends the uplink control channel configuration information of the cell of the macro base station to a UE.

The sending of the configuration information may be sent in broadcast mode, or may be sent by adopting dedicated signaling.

If the micro base station sends configuration information of a neighboring base station in broadcast mode, an applicable version or an applicable case can be made clear in an SIB (System Information Block, system information block). For example, the applicable version is, for example, 3GPP Release 10, 3GPP Release 11, 3GPP Release 12, or the like. The applicable case means determining a subframe of a frequency band near or a subframe corresponding to an uplink subframe of a UL frequency band where downlink data transmission exists, for example, an uplink subframe of a UL frequency band, a TDD uplink subframe, a subframe of a frequency band near the UL frequency band, or a subframe corresponding to an uplink subframe of the UL frequency band near a UL frequency band, where downlink data transmission occurs in the frequency band near the UL frequency band, for sending interference elimination information.

If the micro base station sends configuration information of a neighboring base station, for example, an RRC reconfiguration message and the like, through signaling dedicated for radio resource control (Radio Resource Control, RRC), the base station selects UE-dedicated signaling according to a UE capability to send the configuration information.

1403. The UE determines, according to the received uplink control channel configuration information of the cell of the macro base station, a location where the micro base station suffers interference from the macro base station.

When the uplink control channel configuration information is the PUCCH configuration information, the interference location includes an overlapping part between a location of a PUCCH resource of a cell of the neighboring base station and a location of a downlink control channel resource of a cell of the serving base station.

Furthermore, that the UE determines, according to the configuration information, a location where the serving base station suffers interference from the neighboring base station includes:

The UE acquires the location of the PUCCH resource of the cell of the neighboring base station according to a location and an offset of an uplink control resource in the PUCCH configuration information of the cell of the neighboring base station, and determines the interference location according to the location of the PUCCH resource of the cell of the neighboring base station and the location of the downlink control channel resource of the cell of the serving base station.

When the uplink control channel configuration information is the PRACH configuration information, the interference location includes an overlapping part between a location of a PRACH resource of a cell of the neighboring base station and a location of a downlink control channel resource of a cell of the serving base station.

Furthermore, that the UE determines, according to the configuration information, a location where the serving base station suffers interference from the neighboring base station includes:

The UE acquires the location of the PRACH resource of the cell of the neighboring base station according to a configuration index and a frequency domain offset in the PRACH configuration information of the cell of the neighboring base station, and determines the interference location according to the location of the PRACH resource of the cell of the neighboring base station and the location of the downlink control channel resource of the cell of the serving base station.

When the uplink control channel configuration information is the Sounding RS configuration information, the interference location includes an overlapping part between a location of a Sounding RS resource of a cell of the neighboring base station and a location of a downlink control channel resource of a cell of the serving base station.

That the UE determines, according to the configuration information, a location where the serving base station suffers interference from the neighboring base station includes:

The UE acquires the location of the Sounding RS resource of the cell of the neighboring base station according to a bandwidth configuration of a pilot symbol and a subframe configuration of the pilot symbol in the Sounding RS configuration information of the cell of the neighboring base station, and determines the interference location according to the location of the Sounding RS resource of the cell of the neighboring base station and the location of the downlink control channel resource of the cell of the serving base station.

For example, as shown in FIG. 8, PUCCH resources (that is, the slashed and shadowed parts on the upper and lower edges of the blank frames in FIG. 8) that occupy sidebands of a frequency band and are sent through sub frames 0, 1, 5, and 6 in an FDD UL frequency band of a macro base station overlap (that is, the small black grid parts in the downlink subframes of a micro base station in the figure) with a part of PDCCH resources (that is, gridding sideband parts on the left of subframes in the figure) that are at sidebands and sent through downlink subframes 0, 1, 5, and 6 in an FDD UL frequency band of a micro base station. The overlapping parts are locations where a PUCCH of a cell of the macro base station interferes with a PDCCH of a cell of the micro base station. In FIG. 8 to FIG. 12, the small black grid parts in the downlink sub frames of the micro base station are area schematic diagrams of interference between the PUCCH and the PDCCH. Locations of interference between the PUCCH and the PDCCH may be different according to different TDD configurations. In addition, when an uplink control channel (a PUCCH, a PRACH, or Sounding RS) and a downlink control channel (a PDCCH, CRS, a synchronization channel, or a broadcast channel) change, the interference locations also change; however, a specific interference elimination method and principle are consistent with the present invention. Therefore, details are not repeated herein.

1404. The UE eliminates the interference according to the determined interference location.

When location information of the interference is about an overlapping part between the location of the PUCCH resource of the cell of the macro base station and the location of the downlink control channel resource of the cell of the micro base station, that the interference is eliminated according to the location information of the interference includes:

The UE acquires a received power of an interference bit at the interference location according to the cyclically shifted sequence and the orthogonal code sequence of the uplink control resource of the cell of the macro base station, and the UE acquires, according to a received power of a resultant signal and the received power of the interference bit, a power of a downlink data signal sent by the cell of the micro base station where the UE is located, and acquires the downlink data signal according to the power of the downlink data signal.

Furthermore, the UE acquires the received power of the interference bit at the interference location specifically according to the cyclically shifted sequence and the orthogonal code sequence of the uplink control resource of the cell of the macro base station and by performing a code sequence correlation operation, and the UE subtracts the received power of the interference bit from the received power of the resultant signal to obtain the power of the downlink data signal sent by the micro base station where the UE is located, and acquires the downlink data signal according to the power of the downlink data signal.

When the location information of the interference is about an overlapping part between the location of the PRACH resource of the cell of the macro base station and the location of the downlink control channel resource of the cell of the micro base station, that the interference is eliminated according to the location information of the interference includes:

The UE acquires a received power of an interference bit at the interference location according to a PRACH access preamble configuration of the cell of the macro base station, and the UE acquires, according to a received power of a resultant signal and the received power of the interference bit, a power of a downlink data signal sent by the cell of the micro base station where the UE is located, and acquires the downlink data signal according to the power of the downlink data signal.

Furthermore, the UE acquires the received power of the interference bit at the interference location specifically according to the PRACH access preamble configuration of the cell of the macro base station, and the UE subtracts the received power of the interference bit from the received power of the resultant signal to obtain the power of the downlink data signal sent by the cell of the micro base station where the UE is located, and acquires the downlink data signal according to the power of the downlink data signal.

When the location information of the interference is about an overlapping part between the location of the Sounding RS resource of the cell of the macro base station and the location of the downlink control channel resource of the cell of the micro base station, that the interference is eliminated according to the location information of the interference includes:

The UE acquires a received power of an interference bit at the interference location by performing a code sequence correlation operation according to a Sounding RS code sequence of the cell of the macro base station, and the UE acquires, according to a received power of a resultant signal and the received power of the interference bit, a power of a downlink data signal sent by the cell of the micro base station where the UE is located, and acquires the downlink data signal according to the power of the downlink data signal.

If no PRACH access preamble configuration is received, the code sequence correlation operation is performed through all PRACH preambles to acquire the received power of the interference bit.

When the location information of the interference is about an overlapping part between the location of the Sounding RS resource of the cell of the macro base station and the location of the downlink control channel resource of the cell of the micro base station, that the interference is eliminated according to the location information of the interference includes:

The UE acquires a received power of an interference bit at the interference location by performing a code sequence correlation operation according to a Sounding RS code sequence of the cell of the macro base station, and the UE acquires, according to a received power of a resultant signal and the received power of the interference bit, a power of a downlink data signal sent by the cell of the micro base station where the UE is located, and acquires the downlink data signal according to the power of the downlink data signal.

Furthermore, the UE acquires the received power of the interference bit at the interference location specifically by performing the code sequence correlation operation according to the Sounding RS code sequence of the cell of the macro base station; and the UE subtracts the received power of the foregoing interference bit of the Sounding RS from the received power of the resultant signal to obtain the power of the downlink data signal sent by the micro base station where the UE is located, and acquires the downlink data signal according to the power of the downlink data signal.

In the embodiment, a UE receives configuration information of a cell of a macro base station, where the configuration information is sent by a micro base station; the UE determines a location of interference according to the received configuration information of the macro base station; and the UE eliminates the interference according to the determined location of the interference. In this way, interference from sending uplink control signaling to receiving signaling of a downlink subframe in an FDD UL frequency band or a TDD frequency band by the micro base station is eliminated.

FIG. 15 is another interference processing method according to an embodiment. A macro base station sends uplink control channel configuration information of the macro base station to a micro base station, and the micro base station avoids interference according to the received configuration information, that is, no resource is allocated at an interference location. In the embodiment, the macro base station is taken as an example of a neighboring base station and the micro base station is taken as an example of a serving base station for illustration. Application scenarios of the method include but are not limited to those illustrated in the embodiment. The method includes:

1501. A macro base station sends uplink control channel configuration information of a cell of the macro base station to a micro base station.

The configuration information includes uplink control channel configuration information or downlink control channel configuration information.

The uplink control channel configuration information may include PUCCH configuration information, PRACH configuration information, or channel sounding reference symbol (Sounding RS) configuration information of the cell of the macro base station. For details, refer to the content of step 1401 in the embodiment shown in FIG. 14. Details are not repeated herein.

The downlink control channel configuration information may include configuration information of a physical downlink control channel PDCCH or a common reference symbol CRS of the cell of the macro base station.

The PDCCH configuration information includes:
time domain configuration, which is represented through the number of symbols of each subframe occupied by the PDCCH; and
frequency domain configuration, which is represented through a frequency point and bandwidth of a PDCCH channel.

The CRS configuration information includes:
a frequency point and bandwidth sent by the CRS; and
the number of antennas used by the CRS.

1502. The micro base station adjusts, according to the received configuration information, an overlapping part of resource locations in configuration information of cells of the micro base station and the macro base station by allocating a resource.

Furthermore, if the micro base station receives the uplink control channel configuration information of the cell of the macro base station, that the micro base station adjusts, by allocating the resource, the overlapping part of the resources indicated in the configuration information of cells of the micro base station and the macro base station includes:

When the micro base station allocates the resource to a downlink control channel, the overlapping part between the resource location in the uplink control channel configuration information of the cell of the macro base station and the resource location in the downlink control channel configuration information of a cell of the micro base station is not allocated to the downlink control channel of the cell of the micro base station.

Furthermore, if the micro base station receives the downlink control channel configuration information of the cell of the macro base station, that the micro base station adjusts, by allocating the resource, the overlapping part of the resources in the configuration information of the cell of the micro base station and the cell of the macro base station includes:

Furthermore, when the micro base station allocates the resource to an uplink control channel, the overlapping part between the resource location in the downlink control channel configuration information of the cell of the macro base station and the resource location in the uplink control channel configuration information of the cell of the micro base station is not allocated to the uplink control channel of the cell of the micro base station.

Avoiding interference by the PDCCH is taken as an example, and as shown in FIG. 8, PDCCH resource locations of the macro base station are shown as slashes and shadows in blank frames. PDCCH resource locations of the micro base station may be at least one of the first three symbols of a subframe, for example, B1 in the left sideband of each subframe. Therefore, a part of PDCCH resources of the micro base station will suffer interference from a part of PUCCH resources of the macro base station. Interference locations are shown as small black grids in downlink sub frames of the micro base station in FIG. 8. Overlapping parts (small black grid parts in FIG. 8) between PUCCH resource locations of a cell of the macro base station and PDCCH resource locations of a cell of the micro base station are not allocated to a downlink control channel of the micro base station, so as to eliminate interference. An avoidance scheme of other configuration information of the downlink control channel is similar to that of the PDCCH, only that the resource locations are different. Therefore, details are not repeated herein.

When interference from the micro base station to an uplink of the macro base station is considered, when allocating a PUCCH resource, the macro base station may also not allocate the overlapping parts (small black grid parts in FIG. 9) between the PUCCH resource locations of the macro base station and PDCCH resource locations of the micro base station to an uplink control channel, for example, a PUCCH, of the macro base station.

1503. The micro base station sends the adjusted configuration information to a UE.

For example, in FIG. 8, the micro base station adjusts the PDCCH bandwidth from a full bandwidth B1 to a narrower bandwidth B2. The micro base station may notify the UE of the adjusted bandwidth B2, and then the UE receives the PDCCH through the bandwidth B2.

A sending mode of the configuration information is similar to the content of step 1402 in the embodiment shown in FIG. 14. Therefore, details are not repeated herein.

1504. Optionally, the UE receives the adjusted configuration information sent by the micro base station and receives data according to the adjusted configuration information.

If the micro base station is also capable of sending other adjusted scheduling configuration information to the UE, the UE receives the data according to the PDCCH configuration information or other downlink scheduling configuration information. The PDCCH configuration information received by the UE is mainly a location of a resource block occupied by a PDCCH control channel, where the location of the resource block occupied by the PDCCH control channel may be represented through a frequency point where a PDCCH channel is located and bandwidth occupied by the PDCCH channel. When location information of a resource block occupied by a downlink control channel is not transferred, a same frequency point as the cell is used by default. Other scheduling information may also be a location of a resource block occupied by the scheduling information, where the location of the occupied resource block may also be represented through a frequency point where the resource is located and bandwidth occupied by the resource. If optional information of the resource frequency point is not transferred, a same frequency point as the cell is used by default.

In the embodiment, configuration information of a cell of a macro base station is sent by the macro base station to a micro base station, and the micro base station avoids interference according to the received configuration information, that is, adjusts a location of a frequency or a time domain of a PDCCH, a CRS, a synchronization channel, or a broadcast channel of a cell of the micro base station to eliminate generated interference with a resource in an uplink control channel of the macro base station, thereby eliminating interference from sending uplink control signaling to receiving signaling of a downlink subframe in an FDD UL frequency band or a TDD frequency band of the micro base station.

In addition, in the embodiment, the configuration information of the cell of the macro base station is sent by the macro base station to the micro base station, and the micro base station avoids interference according to the received configuration information, that is, adjusts a location of a frequency or a time domain of a PUCCH, a PRACH, or a Sounding RS of a cell of the micro base station to eliminate interference with a resource in a downlink control channel of the macro base station, thereby eliminating interference from sending downlink control signaling to receiving signaling in an uplink subframe of the micro base station.

In the embodiment, a macro base station is taken as an example for a neighboring base station and a micro base station is taken as an example of a serving base station for illustration. An application scenario provided in the present invention may not only be applied between a macro base station and a micro base station that use a same access technology, but may also be applied between a macro base station and a micro base station that use different access technologies.

Neighboring base stations provided in the embodiment may be a heterogeneous network or may also be a homogeneous network, and may be an intra-frequency network or may also be an inter-frequency network.

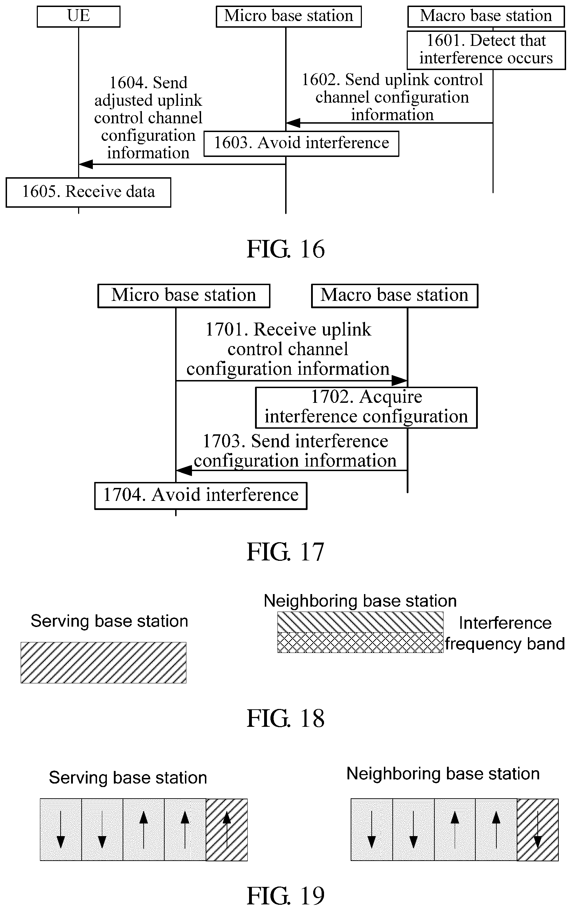

An interference elimination method provided in an embodiment shown in FIG. 16 is similar to the interference elimination method provided in the embodiment shown in FIG. 15. However, the differences are as follows:
The macro base station is capable of periodically sending configuration information to the micro base station;
the macro base station sends configuration information of the macro base station to the micro base station after detecting interference; or
after configuring a cell of the macro base station is completed, the macro base station sends the configuration information of the cell of the macro base station to the micro base station.

In this embodiment, the configuration information includes the uplink control channel configuration information used to be provided to the micro base station to eliminate interference in receiving downlink data. The downlink control channel configuration information is used to be provided to the micro base station to eliminate interference in receiving uplink data.

The following describes a case where interference is detected. Other cases are similar to the present invention. Therefore, details are not repeated herein. The case where interference is detected includes:

In the embodiment, configuration information of a cell of a macro base station is sent from the macro base station to a micro base station, and the micro base station avoids interference according to the received configuration information, that is, adjusts a downlink control resource location or adjusts an uplink control resource location to eliminate generated interference with a resource in an uplink control channel of the macro base station, thereby eliminating interference from sending uplink control signaling to receiving signaling of a downlink subframe in an FDD UL frequency band or a TDD frequency band of the micro base station, or interference from sending downlink control channel of the micro base station to receiving uplink control channel of the macro base station.

In the foregoing embodiments, a micro base station and a macro base station are capable of correctly parsing configuration information of uplink and downlink control channels and uplink and downlink reference symbols of the macro base station. However, when the macro base station and the micro base station use different RATs, the micro base station cannot parse the configuration information of the control channels of the macro base station; alternatively, the macro base station cannot parse configuration information of control channels of the micro base station.

The foregoing interference problem also occurs between a neighboring base station and a serving base station in different access technologies.

The following solution is provided to solve a problem of interference between uplink and downlink control channels of neighboring base stations using a same access technology and different access technologies.

The present invention provides another interference processing method, and as shown in FIG. 17, a macro base station directly or indirectly indicates information of a location where interference exists for a micro base station, and the micro base station avoids the interference between control channels according to the information of the location. In the embodiment, the macro base station is taken as an example of a neighboring base station, and the micro base station is taken as an example of a serving base station for illustration. Application scenarios of the method include but are not limited to those illustrated in the embodiment. The method specifically includes:

1701. A macro base station receives configuration information of a cell of the micro base station.

The configuration information may include uplink and downlink frequency points, frequency band configuration information, uplink and downlink subframe configuration information, or the like of the cell of the micro base station.

1702. The macro base station acquires configuration information of a cell of the macro base station, and acquires, according to the configuration information of the cell of the macro base station and the configuration information of the cell of the micro base station, configuration information of a time domain and a frequency domain where the micro base station interferes with the macro base station.

The configuration information of the interference time domain and frequency domain includes resource location information of the time domain and the frequency domain where interference occurs or resource configuration information of the time domain and the frequency domain where the interference occurs.

The macro base station may acquire, according to a measurement, a performance specification, a protocol rule, a default mode, or the like, the configuration information of the time domain and the frequency domain where the micro base station interferes with the base station.

When a UE under the macro base station detects interference for the micro base station, the micro base station notifies the macro base station of a working frequency point of the micro base station and uplink-to-downlink ratio information. When the macro base station or a UE under the macro base station detects interference for the micro base station, the UE reports an interference detection measurement result to the macro base station, and the macro base station determines, according to configuration information of the micro base station reported by the base station or the UE, a location of a frequency domain or a time domain where the micro base station interferes with the micro base station.

The interference frequency domain of the micro base station is set according to an interference threshold, and a frequency band meeting the interference threshold is the location of the interference frequency domain.

The interference time domain of the micro base station is determined according to a timeslot in which the micro base station sends downlink data.

The method of determining the interference frequency domain according to a performance specification, a protocol rule, or a default mode includes defining a frequency domain range of a value. When an overlapping part exists in a frequency domain of the micro base station and a frequency domain of the macro base station within the set frequency domain range, it is considered that the overlapping part is an interference frequency domain part, for example, 5 MHz, 10 MHz, 30 MHz, or the like. For example, when frequency intervals of two base stations are within the foregoing set range, it is considered that interference exists in a frequency domain.

When the micro base station sends its working frequency band information, for example, a working frequency point and working bandwidth, to the macro base station, the macro base station determines information of an interference frequency band according to a working frequency band of the micro base station and a working frequency band of the macro base station itself. For example, in FIG. 18, the macro base station determines that a part of frequency bands (the frequency band in gridding shadow) are the frequency bands interfering with the micro base station. Then, the macro base station notifies the micro base station of information of the determined interference frequency band, and the micro base station avoids interference according to the configuration information of the interference frequency band when configuring an uplink or downlink control channel in the frequency band. That is to say, in the interference frequency domain, an uplink control channel is allocated a downlink control channel is allocated, or data is not scheduled or the like.

The configuration information of the interference frequency domain is represented through a central frequency point and a frequency band, or represented by means of an offset relative to a frequency.

A case where interference occurs in the time domain is similar. As shown in FIG. 19, it shows the interference in time domains of the micro base station and the macro base station.

When the micro base station sends working time and/or frequency configuration information of the micro base station to the macro base station, for example, a timeslot used for uplink resource configuration information and a timeslot used for downlink resource configuration information, an uplink-to-downlink ratio, or an uplink and downlink configuration mode index to the macro base station. The macro base station determines information of an interference time period according to the configuration information of the working time domain of the micro base station. For example, in FIG. 19, the macro base station determines that a part of timeslots (the slashed and shadowed parts) are timeslots when interference occurs in the micro base station. Then, the macro base station notifies the micro base station of information of the determined interference time domain, and the micro base station may consider the interference information and avoid the interference when configuring an uplink or a downlink control channel in the timeslot. That is to say, in the interference timeslot, an uplink control channel is not allocated, a downlink control channel is not allocated, or data is not scheduled or the like.

When a resource location of interference is determined simultaneously according to a time domain and a frequency domain, interference avoidance processing is performed in combination with the foregoing methods in FIG. 17 and in FIG. 18. Details are not repeated herein. For an interference time domain, a 1 ms radio frame is used as the unit of a timeslot, and a time domain resource susceptible to interference is indicated by means of Bitstring or by means of Bitmap.

If the time domain resource susceptible to interference covers a relatively large time span, the time domain may be indicated in radio frames. The indication of a frequency domain may be indicated by means of a central frequency point and a frequency band, or frequency point information may be represented by means of an offset relative to a frequency.

1703. The macro base station sends the configuration information of the time domain and the frequency domain where the micro base station interferes with the macro base station to the micro base station.

1704. When scheduling resources, the micro base station adjusts the configuration information of the interference time domain and frequency domain of the micro base station and the macro base station by allocating the resources.

Furthermore, that the configuration information of the interference time domain and frequency domain of the micro base station and the macro base station are adjusted by allocating the resources includes:

When the serving base station allocates the resource to a downlink control channel, an overlapping part between a resource location indicated in configuration information of the interference frequency domain or time domain of a cell of the neighboring base station and a resource in the downlink control channel of a cell of the serving base station, or an interference frequency domain or time domain resource of the neighboring base station is not allocated to the downlink control channel of the cell of the serving base station.

When the serving base station allocates the resource to an uplink control channel, the overlapping part between the resource location indicated in the configuration information of the interference frequency domain or time domain of the cell of the neighboring base station and a resource in the uplink control channel of the cell of the serving base station, or the interference frequency domain or time domain resource of the neighboring base station is not allocated to the uplink control channel of the serving base station.

Regarding the uplink control channel configuration information and the downlink control channel configuration information, for details about the uplink control channel configuration information, reference is made to the content of step 1401 in the embodiment shown in FIG. 14; and for details about the downlink control channel configuration information, reference is made to the content of step 1501 in the embodiment shown in FIG. 15. Details are not repeated herein.

In the embodiment, a macro base station receives configuration information of a micro base station, where the configuration information may include uplink and downlink frequency points, frequency band configuration information, uplink and downlink subframe configuration information, or the like of the micro base station. The macro base station acquires the configuration information according to a measurement, a performance specification, a protocol rule, or a default mode. When scheduling resources, the micro base station performs an interference avoidance operation according to configuration information of an interference time domain and frequency domain which is sent by the macro base station, thereby eliminating interference of scheduling of an uplink control channel, a downlink control channel, or data at the interference frequency domain or time domain location.

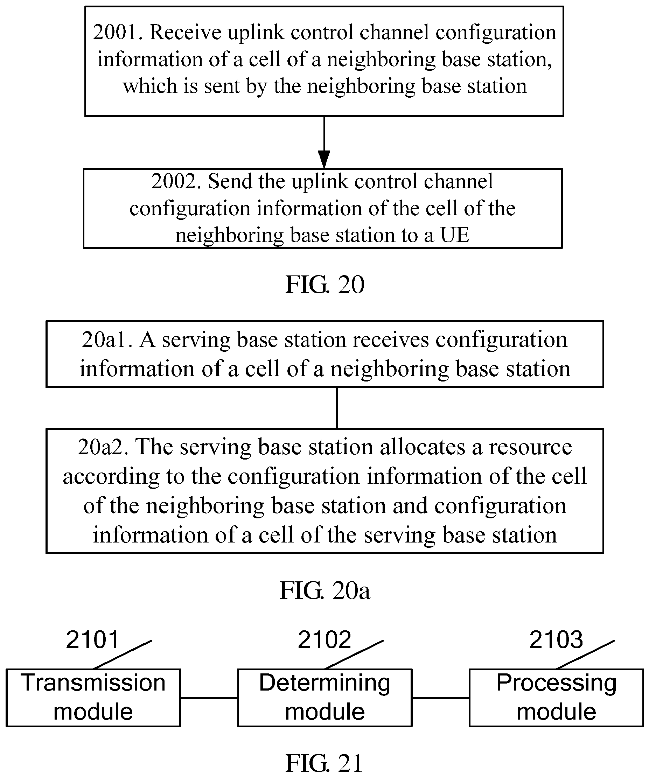

As shown in FIG. 20, an embodiment further provides an interference processing method, including:

2001. A serving base station receives uplink control channel configuration information of a cell of a neighboring base station, which is sent by the neighboring base station.

The uplink control channel configuration information includes physical uplink control channel PUCCH configuration information, physical random access channel PRACH configuration information, or channel sounding reference symbol Sounding RS configuration information of the cell of the neighboring base station.

The PUCCH configuration information includes a location of an uplink control resource, a cyclically shifted sequence, an orthogonal code sequence of the uplink control resource, and a PUCCH offset.

The PRACH configuration information includes a PRACH configuration index, a frequency domain offset of the PRACH, and a PRACH access preamble configuration.

The Sounding RS configuration information includes a bandwidth configuration of a pilot symbol and a subframe configuration of the pilot symbol.

2002. The serving base station sends the uplink control channel configuration information of the cell of the neighboring base station to a UE.

The UE eliminates interference according to the uplink control channel configuration information.

According to an interference processing method provided in the embodiment, a serving base station receives uplink control channel configuration information of a cell of a neighboring base station, and sends the configuration information to a UE, so that the UE determines, according to the configuration information, a location where the serving base station suffers interference from the neighboring base station, and eliminates the interference according to the location. In this way, when the neighboring base station sends uplink control signaling, interference between sending the uplink control signaling in an uplink control channel and receiving downlink control signaling in a downlink control channel at a corresponding location of the serving base station is eliminated.

FIG. 20a shows another interference processing method according to an embodiment of the present invention, including:

20a1. A serving base station receives configuration information of a cell of a neighboring base station, where the configuration information of the cell of the neighboring base station includes uplink control channel configuration information, downlink control channel configuration information, or configuration information of an interference frequency domain or time domain of the cell of the neighboring base station.

20a2. The serving base station allocates a resource according to the configuration information of the cell of the neighboring base station and configuration information of a cell of the serving base station.

The allocating a resource includes not allocating an overlapping part between resource locations in the configuration information of the cell of the serving base station and the configuration information of the cell of the neighboring base station to the serving base station.

A serving base station receives configuration information of a cell of a neighboring base station, and the serving base station allocates a resource according to the configuration information of the cell of the neighboring base station and configuration information of a cell of the serving base station. In this way, when the neighboring base station sends uplink control signaling, interference between sending the uplink control signaling in an uplink control channel and receiving downlink control signaling in a downlink control channel at a corresponding location of the serving base station is eliminated.

FIG. 21 shows an interference processing apparatus according to an embodiment of the present invention, including:
a transmission module 2101, configured to receive uplink control channel configuration information of a cell of a neighboring base station, which is sent by a serving base station, where the uplink control channel configuration information includes physical uplink control channel PUCCH configuration information, physical random access channel PRACH configuration information, or channel sounding reference symbol Sounding RS configuration information of the cell of the neighboring base station;
a determining module 2102, configured to determine, according to the configuration information received by the transmission module, a location where the serving base station suffers interference from the neighboring base station; and
a processing module 2103, configured to eliminate interference according to the interference location determined by the determining module.

Furthermore, the determining module of the interference processing apparatus according to the embodiment of the present invention is configured to:
determine, according to the configuration information received by the transmission module, that the serving base station suffers interference from an overlapping part between a location of a PUCCH resource of the cell of the neighboring base station and a location of a downlink control channel resource of a cell of the serving base station;
determine, according to the configuration information received by the transmission module, that the serving base station suffers interference from an overlapping part between a location of a PRACH resource of the cell of the neighboring base station and a location of a downlink control channel resource of a cell of the serving base station; or
determine, according to the configuration information received by the transmission module, that the serving base station suffers interference from an overlapping part between a location of a Sounding RS resource of the cell of the neighboring base station and a location of a downlink control channel resource of a cell of the serving base station.

Furthermore, the determining module of the interference processing apparatus according to the embodiment of the present invention is further configured to:
acquire the location of the PUCCH resource of the cell of the neighboring base station according to the location and offset of the uplink control resource in the PUCCH configuration information of the cell of the neighboring base station, where the PUCCH configuration information is in the configuration information received by the transmission module; and determine the interference location according to the location of the PUCCH resource of the cell of the neighboring base station and the location of the downlink control channel resource of the cell of the serving base station;
acquire the location of the PRACH resource of the cell of the neighboring base station according to a configuration index and a frequency domain offset in the PRACH configuration information of the cell of the neighboring base station, where the PRACH configuration information is in the configuration information received by the transmission module; and determine the interference location according to the location of the PRACH resource of the cell of the neighboring base station and the location of the downlink control channel resource of the cell of the serving base station; or
acquire the location of the Sounding RS resource of the cell of the neighboring base station according to a bandwidth configuration of a pilot symbol and a subframe configuration of the pilot symbol in the Sounding RS configuration information of the cell of the neighboring base station, where the Sounding RS configuration information is in the configuration information received by the transmission module; and determine the interference location according to the location of the Sounding RS resource of the cell of the neighboring base station and the location of the downlink control channel resource of the cell of the serving base station.

Furthermore, the processing module of the interference processing apparatus according to the embodiment of the present invention is configured to:
acquire a received power of an interference bit at the interference location according to a cyclically shifted sequence and an orthogonal code sequence of the uplink control resource of the cell of the neighboring base station; acquire, according to a received power of a resultant signal and the received power of the interference bit, a power of a downlink data signal sent by the cell of the serving base station where the UE is located; and acquire the downlink data signal according to the power of the downlink data signal;
acquire a received power of an interference bit at the interference location according to an access preamble configuration of the PRACH of the cell of the neighboring base station; acquire, according to a received power of a resultant signal and the received power of the interference bit, a power of a downlink data signal sent by the cell of the serving base station where the UE is located; and acquire the downlink data signal according to the power of the downlink data signal; or
acquire a received power of an interference bit at the interference location by performing a code sequence correlation operation according to a Sounding RS code sequence of the cell of the neighboring base station; acquire, according to a received power of a resultant signal and the received power of the interference bit, a power of a downlink data signal sent by the cell of the serving base station where the UE is located; and acquire the downlink data signal according to the power of the downlink data signal.

The embodiment of the present invention provides an interference processing apparatus, so that when a neighboring base station sends uplink control signaling, interference between sending uplink control signaling in an uplink control channel and receiving downlink control signaling in a downlink control channel at a corresponding location of a serving base station is eliminated.

In addition, when the neighboring base station sends the uplink control signaling at a co-channel or an adjacent channel location with the serving base station, interference from sending the uplink control signaling in the uplink control channel to receiving the downlink control signaling in the downlink control channel of the serving base station can be eliminated; alternatively, interference from sending downlink control signaling in a downlink control channel of the neighboring base station at a co-channel or an adjacent channel location with the serving base station to receiving uplink control signaling in an uplink control channel of the serving base station is eliminated.

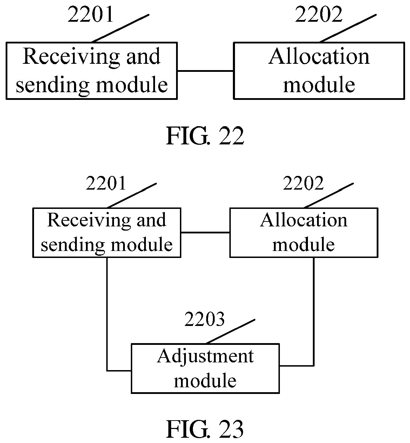

FIG. 22 shows another interference processing apparatus according to an embodiment of the present invention, including:
a receiving and sending module, configured to receive configuration information of a cell of a neighboring base station, where the configuration information of the cell of the neighboring base station includes uplink control channel configuration information, downlink control channel configuration information, or configuration information of an interference frequency domain or time domain of the cell of the neighboring base station; and
an allocation module, configured to determine an overlapping part between resources according to the configuration information of the cell of the neighboring base station and configuration information of a cell of the serving base station, and allocate a resource.

Furthermore, the allocation module is configured not to allocate an overlapping part between resource locations in the configuration information of the cell of the serving base station and the cell of the neighboring base station to the serving base station.

Furthermore, as shown in FIG. 23, the apparatus further includes an adjustment module, configured to adjust the configuration information of the cell of the serving base station according to the configuration information of the cell of the neighboring base station.

The configuration information of the cell of the serving base station does not include the overlapping part between resource locations in the configuration information of the cell of the serving base station and the configuration information of the cell of the neighboring base station, and the configuration information is adjusted by the adjustment module.

The receiving and sending module is further configured to send the configuration information of the cell of the serving base station to a user terminal UE, where the configuration information is adjusted by the adjustment module.

Furthermore, the allocation module of the interference processing apparatus according to the embodiment of the present invention is configured not to:
when the serving base station allocates the resource to a downlink control channel, allocate the overlapping part between a resource location in the uplink control channel configuration information of the cell of the neighboring base station and a resource location in the downlink control channel configuration information of the cell of the serving base station to the downlink control channel of the cell of the serving base station;
when the serving base station allocates the resource to an uplink control channel, allocate the overlapping part between a resource location in the downlink control channel configuration information of the cell of the neighboring base station and a resource location in the uplink control channel configuration information of the cell of the serving base station to the uplink control channel of the cell of the serving base station;
when the serving base station allocates the resource to a downlink control channel, not allocate the overlapping part between a resource location in the configuration information of the interference frequency domain or time domain of the cell of the neighboring base station and a resource location in the downlink control channel of the cell of the serving base station to the uplink control channel of the cell of the serving base station;
allocate the overlapping part between a resource location in the configuration information of the interference frequency domain or time domain of the neighboring base station and a resource location in the downlink control channel configuration information of the cell of the serving base station to the downlink control channel of the cell of the serving base station;
when the serving base station allocates the resource to an uplink control channel, allocate the overlapping part between a resource location in the configuration information of the interference frequency domain or time domain of the cell of the neighboring base station and a resource location in the uplink control channel configuration information of the cell of the serving base station to the downlink control channel of the cell of the serving base station; or
allocate the overlapping part between a resource location in the configuration information of an interference frequency domain or time domain resource of the neighboring base station and a resource location in the uplink control channel configuration information of the cell of the serving base station to the uplink control channel of the serving base station.

The embodiment of the present invention provides an interference processing apparatus, including: a receiving and sending module, configured to receive configuration information of a cell of a neighboring base station, where the configuration information of the cell of the neighboring base station includes uplink control channel configuration information, downlink control channel configuration information, or configuration information of an interference frequency domain or time domain of the cell of the neighboring base station; and an allocation module, configured to determine an overlapping part between resources according to the configuration information of the cell of the neighboring base station and configuration information of a cell of the serving base station, and allocate a resource, where the allocating a resource includes not allocating an overlapping part between resource locations in the configuration information of the cell of the serving base station and the cell of the neighboring base station to the serving base station. In this way, when the neighboring base station sends uplink control signaling, interference between sending the uplink control signaling in an uplink control channel and receiving downlink control signaling in a downlink control channel at a corresponding location of the serving base station is eliminated.

In addition, when the neighboring base station sends the uplink control signaling at a co-channel or an adjacent channel location with the serving base station, interference from sending the uplink control signaling in the uplink control channel to receiving the downlink control signaling in the downlink control channel of the serving base station can be eliminated; alternatively, interference from sending downlink control signaling in a downlink control channel of the neighboring base station at a co-channel or an adjacent channel location with the serving base station to receiving uplink control signaling in an uplink control channel of the serving base station is eliminated.

It should be noted that, in the foregoing user equipment and base station embodiments, included units are divided merely according to functional logic, but are not limited to the foregoing division so long as a corresponding function can be implemented. In addition, a specific name of each functional unit is only for better distinguishing each other, but is not used to limit the protection scope of the present invention.

In addition, persons of ordinary skill in the art may understand that all or part of the steps of the foregoing methods embodiments may be implemented by a program instructing relevant hardware. The program may be stored in a computer readable storage medium. The foregoing storage medium may include a read only memory, a magnetic disk, an optical disk, or the like.

The foregoing descriptions are merely exemplary specific embodiments of the present invention, but are not intended to limit the protection scope of the present invention. Any variation or replacement figured out by persons skilled in the art within the technical scope disclosed in the embodiments of the present invention shall fall within the protection scope of the present invention. Therefore, the protection scope of the present invention shall be subject to the protection scope of the claims.

## Claims

1. An interference processing method performed by a serving base station, comprising:
receiving (20a1) configuration information of a cell of a neighboring base station, wherein the configuration information of the cell of the neighboring base station comprises uplink control channel configuration information or downlink control channel configuration information of the cell of the neighboring base station; and
allocating (20a2) a resource according to the configuration information of the cell of the neighboring base station and configuration information of a cell of the serving base station, wherein:
the allocating a resource comprises not allocating an overlapping part between resource locations in the configuration information of the cell of the serving base station and the configuration information of the cell of the neighboring base station to the serving base station,
**characterized in that**
if the serving base station receives the uplink control channel configuration information of the cell of the neighboring base station, the not allocating an overlapping part between resources in the configuration information of the cell of the serving base station and the cell of the neighboring base station to the serving base station comprises:
when the serving base station allocates a resource to a downlink control channel, not allocating an overlapping part between a resource location in the uplink control channel configuration information of the cell of the neighboring base station and a resource location in the downlink control channel configuration information of the cell of the serving base station to the downlink control channel of the cell of the serving base station;
if the serving base station receives the downlink control channel configuration information of the cell of the neighboring base station, the not allocating an overlapping part between resources in the configuration information of the cell of the serving base station and the cell of the neighboring base station to the serving base station comprises:
when the serving base station allocates a resource to an uplink control channel, not allocating an overlapping part between a resource location in the downlink control channel configuration information of the cell of the neighboring base station and a resource location in the uplink control channel configuration information of the cell of the serving base station to the uplink control channel of the cell of the serving base station
wherein
the uplink control channel configuration information comprises physical uplink control channel PUCCH configuration information, physical random access channel PRACH configuration information, or channel sounding reference symbol Sounding RS configuration information; and
the downlink control channel configuration information comprises physical downlink control channel PDCCH configuration information or common reference symbol CRS configuration information.

2. The method according to claim 1, the method further comprising:
adjusting the configuration information of the cell of the serving base station according to the configuration information of the cell of the neighboring base station; and
sending the adjusted configuration information of the cell of the serving base station to a UE, wherein:
the adjusted configuration information of the cell of the serving base station does not comprise the overlapping part between resource locations in the configuration information of the cell of the serving base station and the configuration information of the cell of the neighboring base station.

3. The method according to claim 1, wherein the receiving configuration information of a cell of a neighboring base station comprises:
periodically receiving the configuration information of the cell of the neighboring base station;
receiving configuration information of the neighboring base station sent after the neighboring base station detects interference; and
receiving the configuration information of the neighboring base station sent after configuring the neighboring base station is completed.

4. A serving base station, **characterized by** comprising:
a receiving and sending module (2201), configured to receive configuration information of a cell of a neighboring base station, wherein the configuration information of the cell of the neighboring base station comprises uplink control channel configuration information or downlink control channel configuration information of the cell of the neighboring base station; and
an allocation module (2202), configured to determine an overlapping part between resource locations according to the configuration information of the cell of the neighboring base station and configuration information of a cell of a serving base station, and allocate a resource, wherein:
the allocation module (2202) is further configured not to allocate an overlapping part between resource locations in the configuration information of the cell of the serving base station and the cell of the neighboring base station to the serving base station,
**characterized in that**
the allocation module (2203) is further configured not to allocate an overlapping part between a resource location in the uplink control channel configuration information of the cell of the neighboring base station and a resource location in the downlink control channel configuration information of the cell of the serving base station to a downlink control channel of the cell of the serving base station when the serving base station allocates a resource to the downlink control channel;
the allocation module (2202) is further configured not to allocate an overlapping part between a resource location in the downlink control channel configuration information of the cell of the neighboring base station and a resource location in the uplink control channel configuration information of the cell of the serving base station to an uplink control channel of the cell of the serving base station when the serving base station allocates a resource to the uplink control channel; wherein
the uplink control channel configuration information comprises physical uplink control channel PUCCH configuration information, physical random access channel PRACH configuration information, or channel sounding reference symbol Sounding RS configuration information; and
the downlink control channel configuration information comprises physical downlink control channel PDCCH configuration information or common reference symbol CRS configuration information.

5. The serving base station according to claim 4, further comprising:
an adjustment module (2203), configured to adjust the configuration information of the cell of the serving base station according to the configuration information of the cell of the neighboring base station; wherein:
the receiving and sending module (2201) is further configured to send the configuration information of the cell of the serving base station to a user equipment UE, and the configuration information is adjusted by the adjustment module (2203), and
the configuration information of the cell of the serving base station does not comprise the overlapping part between resource locations in the configuration information of the cell of the serving base station and the configuration information of the cell of the neighboring base station, and the configuration information is adjusted by the adjustment module (2203).

6. The serving base station according to claim 4, wherein the receiving and sending module (2201) is further configured to:
periodically receive the configuration information of the cell of the neighboring base station;
receive configuration information of the neighboring base station sent after the neighboring base station detects interference; and
receive the configuration information of the neighboring base station sent after configuring the neighboring base station is completed.

7. The serving base station of any of claims 4 to 6, wherein said serving base station comprises a processing module and a computer-readable storage medium storing instructions for execution by the processing module, such that, when the instructions are executed by the processing module, the processing module is configured to carry out the steps of the method according to any of claims 1 to 3.

8. A computer program product, comprising computer program code, which, when executed by a serving base station, will cause the serving base station to perform the steps of any one of claims 1 to 3.

9. A computer-readable storage medium comprising instructions which, when executed by an apparatus, cause the apparatus to carry out the steps of the method according to any one of claims 1 to 3.

## Patentansprüche

1. Interferenzverarbeitungsverfahren, durchgeführt von einer bedienenden Basisstation, das Folgendes umfasst:
Empfangen (20a1) von Konfigurationsinformationen einer Zelle einer benachbarten Basisstation, wobei die Konfigurationsinformationen der Zelle der benachbarten Basisstation Uplink-Steuerkanal-Konfigurationsinformationen oder Downlink-Steuerkanal-Konfigurationsinformationen der Zelle der benachbarten Basisstation umfassen; und
Zuweisen (20a2) einer Ressource gemäß den Konfigurationsinformationen der Zelle der benachbarten Basisstation und den Konfigurationsinformationen einer Zelle der bedienenden Basisstation, wobei:
das Zuweisen einer Ressource das Nichtzuweisen eines überlappenden Teils zwischen Ressourcenorten in den Konfigurationsinformationen der Zelle der bedienenden Basisstation und den Konfigurationsinformationen der Zelle der benachbarten Basisstation zu der bedienenden Basisstation umfasst,
**dadurch gekennzeichnet, dass**
falls die bedienende Basisstation die Uplink-Steuerkanal-Konfigurationsinformationen der Zelle der benachbarten Basisstation empfängt, das Nichtzuweisen eines überlappenden Teils zwischen Ressourcen in den Konfigurationsinformationen der Zelle der bedienenden Basisstation und der Zelle der benachbarten Basisstation zu der bedienenden Basisstation Folgendes umfasst:
wenn die bedienende Basisstation eine Ressource einem Downlink-Steuerkanal zuordnet, Nichtzuweisen eines überlappenden Teils zwischen einem Ressourcenort in den Uplink-Steuerkanal-Konfigurationsinformationen der Zelle der benachbarten Basisstation und einem Ressourcenort in den Downlink-Steuerkanal-Konfigurationsinformationen der Zelle der bedienenden Basisstation zu dem Downlink-Steuerkanal der Zelle der bedienenden Basisstation;
falls die bedienende Basisstation die Downlink-Steuerkanal-Konfigurationsinformationen der Zelle der benachbarten Basisstation empfängt, das Nichtzuweisen eines überlappenden Teils zwischen Ressourcen in den Konfigurationsinformationen der Zelle der bedienenden Basisstation und der Zelle der benachbarten Basisstation zu der bedienenden Basisstation Folgendes umfasst:
wenn die bedienende Basisstation eine Ressource einem Uplink-Steuerkanal zuordnet, Nichtzuweisen eines überlappenden Teils zwischen einem Ressourcenort in den Downlink-Steuerkanal-Konfigurationsinformationen der Zelle der benachbarten Basisstation und einem Ressourcenort in den Uplink-Steuerkanal-Konfigurationsinformationen der Zelle der bedienenden Basisstation zu dem Uplink-Steuerkanal der Zelle der bedienenden Basisstation,
wobei
die Uplink-Steuerkanal-Konfigurationsinformationen Physical Uplink Control Channel (PUCCH)-Konfigurationsinformationen, Physical Random Access Channel (PRACH)-Konfigurationsinformationen oder kanalsondierende Referenzsymbol-Sondierungs-(RS)-Konfigurationsinformationen umfasst; und
die Downlink-Steuerkanal-Konfigurationsinformationen Physical Downlink Control Channel (PDCCH)-Konfigurationsinformationen oder Common Reference Symbol (CRS)-Konfigurationsinformationen umfassen.

2. Verfahren gemäß Anspruch 1, wobei das Verfahren ferner Folgendes umfasst:
Anpassen der Konfigurationsinformationen der Zelle der bedienenden Basisstation gemäß den Konfigurationsinformationen der Zelle der benachbarten Basisstation; und
Senden der angepassten Konfigurationsinformationen der Zelle der bedienenden Basisstation zu einem UE, wobei:
die angepassten Konfigurationsinformationen der Zelle der bedienenden Basisstation nicht den überlappenden Teil zwischen Ressourcenorten in den Konfigurationsinformationen der Zelle der bedienenden Basisstation und den Konfigurationsinformationen der Zelle der benachbarten Basisstation umfassen.

3. Verfahren gemäß Anspruch 1, wobei das Empfangen der Konfigurationsinformationen einer Zelle einer benachbarten Basisstation Folgendes umfasst:
periodisches Empfangen der Konfigurationsinformationen der Zelle der benachbarten Basisstation; Empfangen der Konfigurationsinformationen der benachbarten Basisstation, die gesendet werden, nachdem die benachbarte Basisstation eine Interferenz erkennt; und
Empfangen der Konfigurationsinformationen der benachbarten Basisstation, die gesendet werden, nachdem das Konfigurieren der benachbarten Basisstation abgeschlossen ist.

4. Bedienende Basisstation, **gekennzeichnet durch** Umfassen:
eines Empfangs- und Sendemoduls (2201), die dazu ausgelegt sind, Konfigurationsinformationen einer Zelle einer benachbarten Basisstation zu empfangen, wobei die Konfigurationsinformationen der Zelle der benachbarten Basisstation Uplink-Steuerkanal-Konfigurationsinformationen oder Downlink-Steuerkanal-Konfigurationsinformationen der Zelle der benachbarten Basisstation umfassen; und
eines Zuordnungsmoduls (2202), das dazu ausgelegt ist, einen überlappenden Teil zwischen Ressourcenorten gemäß den Konfigurationsinformationen der Zelle der benachbarten Basisstation und den Konfigurationsinformationen einer Zelle der bedienenden Basisstation zu bestimmen und eine Ressource zuzuordnen, wobei:
das Zuordnungsmodul (2202) ferner dazu ausgelegt ist, einen überlappenden Teil zwischen Ressourcenorten in den Konfigurationsinformationen der Zelle der bedienenden Basisstation und der Zelle der benachbarten Basisstation nicht der bedienenden Basisstation zuzuordnen,
**dadurch gekennzeichnet, dass**
das Zuordnungsmodul (2203) ferner dazu ausgelegt ist, einen überlappenden Teil zwischen einem Ressourcenort in den Uplink-Steuerkanal-Konfigurationsinformationen der Zelle der benachbarten Basisstation und einem Ressourcenort in den Downlink-Steuerkanal-Konfigurationsinformationen der Zelle der bedienenden Basisstation nicht einem Downlink-Steuerkanal der Zelle der bedienenden Basisstation zuzuordnen, wenn die bedienende Basisstation eine Ressource dem Downlink-Steuerkanal zuordnet;
das Zuordnungsmodul (2202) ferner dazu ausgelegt ist, einen überlappenden Teil zwischen einem Ressourcenort in den Downlink-Steuerkanal-Konfigurationsinformationen der Zelle der benachbarten Basisstation und einem Ressourcenort in den Uplink-Steuerkanal-Konfigurationsinformationen der Zelle der bedienenden Basisstation nicht einem Uplink-Steuerkanal der Zelle der bedienenden Basisstation zuzuordnen, wenn die bedienende Basisstation eine Ressource dem Uplink-Steuerkanal zuordnet; wobei
die Uplink-Steuerkanal-Konfigurationsinformationen Physical Uplink Control Channel (PUCCH)-Konfigurationsinformationen, Physical Random Access Channel (PRACH)-Konfigurationsinformationen oder kanalsondierende Referenzsymbol-Sondierungs-(RS)-Konfigurationsinformationen umfasst; und
die Downlink-Steuerkanal-Konfigurationsinformationen Physical Downlink Control Channel (PDCCH)-Konfigurationsinformationen oder Common Reference Symbol (CRS)-Konfigurationsinformationen umfassen.

5. Bedienende Basisstation gemäß Anspruch 4, die ferner Folgendes umfasst:
ein Anpassungsmodul (2203), das dazu ausgelegt ist, die Konfigurationsinformationen der Zelle der bedienenden Basisstation gemäß den Konfigurationsinformationen der Zelle der benachbarten Basisstation anzupassen;
wobei:
das Empfangs- und Sendemodul (2201) ferner dazu ausgelegt sind, die Konfigurationsinformationen der Zelle der bedienenden Basisstation zu einem Benutzergerät (UE) zu senden, und die Konfigurationsinformationen durch das Anpassungsmodul (2203) angepasst werden, und
die Konfigurationsinformationen der Zelle der bedienenden Basisstation nicht den überlappenden Teil zwischen Ressourcenorten in den Konfigurationsinformationen der Zelle der bedienenden Basisstation und den Konfigurationsinformationen der Zelle der benachbarten Basisstation umfassen, und die Konfigurationsinformationen durch das Anpassungsmodul (2203) angepasst werden.

6. Bedienende Basisstation gemäß Anspruch 4, wobei das Empfangs- und Sendemodul (2201) ferner für Folgendes ausgelegt sind:
periodisches Empfangen der Konfigurationsinformationen der Zelle der benachbarten Basisstation; Empfangen der Konfigurationsinformationen der benachbarten Basisstation, die gesendet werden, nachdem die benachbarte Basisstation eine Interferenz erkennt; und
Empfangen der Konfigurationsinformationen der benachbarten Basisstation, die gesendet werden, nachdem das Konfigurieren der benachbarten Basisstation abgeschlossen ist.

7. Bedienende Basisstation gemäß einem der Ansprüche 4 bis 6, wobei die bedienende Basisstation ein Verarbeitungsmodul und ein computerlesbares Speichermedium umfasst, auf dem Anweisungen zur Ausführung durch das Verarbeitungsmodul gespeichert sind, so dass, wenn die Anweisungen durch das Verarbeitungsmodul ausgeführt werden, das Verarbeitungsmodul dazu ausgelegt ist, die Schritte des Verfahrens gemäß einem der Ansprüche 1 bis 3 auszuführen.

8. Computerprogrammprodukt, das Computerprogrammcode umfasst, der, wenn er von einer bedienenden Basisstation ausgeführt wird, die Rechnereinheit veranlasst, die Schritte gemäß einem der Ansprüche 1 bis 3 auszuführen.

9. Computerlesbares Speichermedium, das Anweisungen enthält, die, wenn sie von einer Vorrichtung ausgeführt werden, die Vorrichtung veranlassen, die Schritte des Verfahrens gemäß einem der Ansprüche 1 bis 3 auszuführen.

## Revendications

1. Procédé de traitement d'interférences effectué par une station de base de desserte, comprenant :
la réception (20a1) d'informations de configuration d'une cellule d'une station de base voisine, les informations de configuration de la cellule de la station de base voisine comprenant des informations de configuration de canal de contrôle de liaison ascendante ou des informations de configuration de canal de contrôle de liaison descendante de la cellule de la station de base voisine ; et
l'affectation (20a2) d'une ressource en fonction des informations de configuration de la cellule de la station de base voisine et d'informations de configuration d'une cellule de la station de base de desserte, dans lequel :
l'affectation d'une ressource comprend la non-affectation d'une partie de chevauchement entre des emplacements de ressources dans les informations de configuration de la cellule de la station de base de desserte et les informations de configuration de la cellule de la station de base voisine à la station de base de desserte,
**caractérisé en ce que**
si la station de base de desserte reçoit les informations de configuration de canal de contrôle de liaison ascendante de la cellule de la station de base voisine, la non-affectation d'une partie de chevauchement entre des ressources dans les informations de configuration de la cellule de la station de base de desserte et la cellule de la station de base voisine à la station de base de desserte comprend :
quand la station de base de desserte affecte une ressource à un canal de contrôle de liaison descendante, la non-affectation d'une partie de chevauchement entre un emplacement d'une ressource dans les informations de configuration de canal de contrôle de liaison ascendante de la cellule de la station de base voisine et un emplacement d'une ressource dans les informations de configuration de canal de contrôle de liaison descendante de la cellule de la station de base de desserte au canal de contrôle de liaison descendante de la cellule de la station de base de desserte ;
si la station de base de desserte reçoit les informations de configuration de canal de contrôle de liaison descendante de la cellule de la station de base voisine, la non-affectation d'une partie de chevauchement entre des ressources dans les informations de configuration de la cellule de la station de base de desserte et la cellule de la station de base voisine à la station de base de desserte comprend :
quand la station de base de desserte affecte une ressource à un canal de contrôle de liaison ascendante, la non-affectation d'une partie de chevauchement entre un emplacement d'une ressource dans les informations de configuration de canal de contrôle de liaison descendante de la cellule de la station de base voisine et un emplacement d'une ressource dans les informations de configuration de canal de contrôle de liaison ascendante de la cellule de la station de base de desserte au canal de contrôle de liaison ascendante de la cellule de la station de base de desserte,
dans lequel
les informations de configuration de canal de contrôle de liaison ascendante comprennent des informations de configuration de canal de contrôle de liaison ascendante physique, PUCCH, des informations de configuration de canal d'accès aléatoire physique, PRACH, ou des informations de configuration de symboles de référence de sondage de canal, Sounding RS ; et
les informations de configuration de canal de contrôle de liaison descendante comprennent des informations de configuration de canal de contrôle de liaison descendante physique, PDCCH, ou des informations de configuration de symboles de référence communs, CRS.

2. Procédé selon la revendication 1, le procédé comprenant en outre :
l'ajustement des informations de configuration de la cellule de la station de base de desserte en fonction des informations de configuration de la cellule de la station de base voisine ; et
l'envoi des informations de configuration ajustées de la cellule de la station de base de desserte à un UE, dans lequel :
les informations de configuration ajustées de la cellule de la station de base de desserte ne comprennent pas la partie de chevauchement entre des emplacements de ressources dans les informations de configuration de la cellule de la station de base de desserte et les informations de configuration de la cellule de la station de base voisine.

3. Procédé selon la revendication 1, dans lequel la réception d'informations de configuration d'une cellule d'une station de base voisine comprend :
la réception périodique des informations de configuration de la cellule de la station de base voisine ;
la réception d'informations de configuration de la station de base voisine envoyées après que la station de base voisine a détecté une interférence ; et
la réception des informations de configuration de la station de base voisine envoyées après que la configuration de la station de base voisine s'est achevée.

4. Station de base de desserte, **caractérisée en ce qu'**elle comprend :
un module de réception et d'envoi (2201), configuré pour recevoir des informations de configuration d'une cellule d'une station de base voisine, les informations de configuration de la cellule de la station de base voisine comprenant des informations de configuration de canal de contrôle de liaison ascendante ou des informations de configuration de canal de contrôle de liaison descendante de la cellule de la station de base voisine ; et
un module d'affectation (2202), configuré pour déterminer une partie de chevauchement entre des emplacements de ressources en fonction des informations de configuration de la cellule de la station de base voisine et d'informations de configuration d'une cellule d'une station de base de desserte, et affecter une ressource, dans laquelle :
le module d'affectation (2202) est également configuré pour ne pas affecter une partie de chevauchement entre des emplacements de ressources dans les informations de configuration de la cellule de la station de base de desserte et la cellule de la station de base voisine à la station de base de desserte,
**caractérisée en ce que**
le module d'affectation (2203) est également configuré pour ne pas affecter une partie de chevauchement entre un emplacement d'une ressource dans les informations de configuration de canal de contrôle de liaison ascendante de la cellule de la station de base voisine et un emplacement d'une ressource dans les informations de configuration de canal de contrôle de liaison descendante de la cellule de la station de base de desserte à un canal de contrôle de liaison descendante de la cellule de la station de base de desserte quand la station de base de desserte affecte une ressource au canal de contrôle de liaison descendante ;
le module d'affectation (2202) est également configuré pour ne pas affecter une partie de chevauchement entre un emplacement d'une ressource dans les informations de configuration de canal de contrôle de liaison descendante de la cellule de la station de base voisine et un emplacement d'une ressource dans les informations de configuration de canal de contrôle de liaison ascendante de la cellule de la station de base de desserte à un canal de contrôle de liaison ascendante de la cellule de la station de base de desserte quand la station de base de desserte affecte une ressource au canal de contrôle de liaison ascendante ; dans laquelle les informations de configuration de canal de contrôle de liaison ascendante comprennent des informations de configuration de canal de contrôle de liaison ascendante physique, PUCCH, des informations de configuration de canal d'accès aléatoire physique, PRACH, ou des informations de configuration de symboles de référence de sondage de canal, Sounding RS ; et
les informations de configuration de canal de contrôle de liaison descendante comprennent des informations de configuration de canal de contrôle de liaison descendante physique, PDCCH, ou des informations de configuration de symboles de référence communs, CRS.

5. Station de base de desserte selon la revendication 4, comprenant en outre :
un module d'ajustement (2203), configuré pour ajuster les informations de configuration de la cellule de la station de base de desserte en fonction des informations de configuration de la cellule de la station de base voisine ; dans laquelle :
le module de réception et d'envoi (2201) est également configuré pour envoyer les informations de configuration de la cellule de la station de base de desserte à un équipement utilisateur, UE, et les informations de configuration sont ajustées par le module d'ajustement (2203), et
les informations de configuration de la cellule de la station de base de desserte ne comprennent pas la partie de chevauchement entre des emplacements de ressources dans les informations de configuration de la cellule de la station de base de desserte et les informations de configuration de la cellule de la station de base voisine, et les informations de configuration sont ajustées par le module d'ajustement (2203).

6. Station de base de desserte selon la revendication 4, dans laquelle le module de réception et d'envoi (2201) est également configuré pour :
recevoir périodiquement les informations de configuration de la cellule de la station de base voisine ;
recevoir des informations de configuration de la station de base voisine envoyées après que la station de base voisine a détecté une interférence ; et
recevoir les informations de configuration de la station de base voisine envoyées après que la configuration de la station de base voisine s'est achevée.

7. Station de base de desserte selon l'une quelconque des revendications 4 à 6, ladite station de base de desserte comprenant un module de traitement et un support de stockage lisible par ordinateur stockant des instructions pour exécution par le module de traitement, de telle sorte que, quand les instructions sont exécutées par le module de traitement, le module de traitement est configuré pour réaliser les étapes du procédé selon l'une quelconque des revendications 1 à 3.

8. Produit-programme informatique, comprenant un code de programme informatique qui, lorsqu'il est exécuté par une station de base de desserte, conduira la station de base de desserte à effectuer les étapes de l'une quelconque des revendications 1 à 3.

9. Support de stockage lisible par ordinateur comprenant des instructions qui, lorsqu'elles sont exécutées par un appareil, conduisent l'appareil à réaliser les étapes du procédé selon l'une quelconque des revendications 1 à 3.
